# EUROPEAN PATENT SPECIFICATION

(11) **EP 1 177 328 B1**
(45) Date of publication and mention of the grant of the patent: **02.04.2003**
(21) Application number: 00932217.3
(22) Date of filing: 10.05.2000
(51) Int. Cl.: C23C 22/36, C23C 28/00

(54) **PROCESS FOR THE TREATMENT OF CONTINUOUS COILS OF SHEET METAL AND PRODUCTS PREPARED THEREBY**
BEHANDLUNGSVERFAHREN VON KONTINUIERLICH GEWALZTEN STAHLBÄNDERN UND DAMIT HERGESTELLTE PRODUKTE
PROCEDE DESTINE AU TRAITEMENT DE ROULEAUX CONTINUS DE FEUILLES METALLIQUES ET PRODUITS PREPARES SELON CE PROCEDE

(30) Priority: 11.05.1999 US 133571 P; 09.05.2000 US 568187
(43) Date of publication of application: 06.02.2002
(73) Proprietor: PPG Industries Ohio, Inc., Cleveland, OH 44111 (US)
(72) Inventor: MCCOLLUM, Gregory, J., Gibsonia, PA 15044 (US); HAUSER, Brian, T., Murrysville, PA 15668 (US); VALKO, Joseph, T., Pittsburgh, PA 15237 (US); GRAY, Ralph, C., Butler, PA 16001 (US)
(74) Representative: Sternagel, Fleischer, Godemeyer & Partner Patentanwälte
(86) International application number: US0012676
(87) International publication number: WO00068460

(56) References cited:
- WO-A-95/02660
- US-A- 5 584 944
- US-A- 5 801 217

## Description

### BACKGROUND OF THE INVENTION

The present invention relates to an improved process for the treatment of continuous coils of sheet metal produced in a steel mill.

The production of light gauge steels for end uses ranging from architectural construction to automobiles is well known. The coils of steel are produced on a cold rolling mill line to the preferred thickness and trimmed or slit to the required width. The metal may be oiled and used directly as cold rolled steel or it may be further coated with a relatively thin layer of a second metal on a continuous galvanizing line. The galvanizing process may be performed in a bath of molten metal, typically with a zinc alloy, or it may be performed electrolytically with essentially pure zinc or with a co-deposit of zinc with a second metal such as iron. An annealing process may also be performed on the zinc coated steel sheet to form an alloy with the steel substrate. The thus coated steel coil may then be oiled for storage or shipment to a customer for subsequent metal working operations. Eventually the oil must be removed by the customer using acid or alkaline cleaners before application of passivating coatings ("pretreatment" coatings for adhesion and corrosion inhibition) or decorative coatings during manufacturing of the metal piece into a desired end product. Residues from the oil and cleaners may remain on the metal surface after cleaning and rinsing, inhibiting the active ingredients in the passivating coatings from effectively bonding with metal atoms at the metal surface, thus diminishing the protective properties thereof.

Hot dip galvanized sheet steel may also be passivated on the galvanizing line for resistance to white rust in storage, typically with a hexavalent chromium product. This is undesirable due to the toxicity of chromium, and the unsuitability as a base for subsequent coating.

It would be desirable to provide an improved process, without the use of chromium, for treating metals at the steel mill before application of protective lubricant, in order to enhance the corrosion protection of the metals as they are manufactured into end use products.

### SUMMARY OF THE INVENTION

In accordance with the present invention, an improved process for treating a metal coated sheet steel is provided, comprising the following steps:
a) contacting a surface of the metal coated sheet steel with a Group IIIB or IVB metal compound or mixture thereof dissolved or dispersed in a carrier medium; followed by
b) contacting the surface of the metal coated sheet steel from step (a) with a protective lubricant.

Another aspect of the present invention is a treated metal coated sheet steel formed in accordance with the process outlined immediately above.

Another aspect of the present invention is a coated metal sheet steel comprising: (a) a metal substrate; (b) a coating comprising a Group IIIB or IVB metal compound or mixture thereof formed upon at least a portion of a surface of the metal substrate; and (c) a protective lubricant coating formed upon at least a portion of the coating.

### DETAILED DESCRIPTION

Unless otherwise indicated, all numbers expressing quantities of ingredients or reaction conditions used in the specification and claims are to be understood as modified in all instances by the term "about".

The process of the present invention is typically used to produce sheet metals such as steel coated with zinc metal, zinc compounds or zinc alloys such as electrogalvanized steel, hot-dipped galvanized steel, Galvannealed steel, and steel plated with zinc alloy. Also, aluminum alloys, aluminum clad steel and aluminum alloy clad steel may be used. The shape of the metal substrate is an elongated strip wound about a spool in the form of a coil. The thickness of the strip preferably ranges from about 0.254 to about 3.18 millimeters (mm) (about 10 to about 125 mils), and more preferably about 0.3 mm, although the thickness can be greater or less, as desired. The width of the strip generally ranges from about 30.5 to about 183 centimeters (about 12 to about 72 inches), although the width can vary depending upon its intended use.

After coating the steel substrate, such as by electro galvanizing or hot dip galvanizing, and cooling the metal surface typically to a temperature of 100-300°F (37-149°C) and prior to the application of a protective lubricant such as oiling of the metal, the surface of the sheet metal is contacted with a Group IIIB or IVB metal compound.

The Group IIIB or IVB metal compound is typically dispersed or dissolved in a carrier medium such as a aqueous medium, vapor, or aerosol. The solution or dispersion may be applied to the metal at a carrier medium temperature of ambient to 150°F (ambient to 65°C) by known application techniques, such as roll coating, dipping or immersion, spraying, intermittent spraying, dipping followed by spraying or spraying followed by dipping. The vapor or aerosol containing the Group IIIB or IVB metal may be applied by passing the continuous strip of metal through a chamber in which the vapor is present. Treatment times are typically short, from a few seconds up to a minute, depending on the speed of the sheet metal line, and the type of coater being used.

The Group IIIB or IVB metals referred to herein are those elements included in such groups in the CAS Periodic Table of the Elements as is shown, for example, in the *Handbook of Chemistry and Physics,* 63rd Edition (1983).

Preferred Group IIIB and IVB metal compounds are compounds of zirconium, titanium, hafnium, yttrium and cerium and mixtures thereof. Typical zirconium compounds may be selected from hexafluorozirconic acid, alkali metal and ammonium salts thereof, ammonium zirconium carbonate, zirconyl nitrate, zirconium carboxylates and zirconium hydroxy carboxylates such as hydrofluorozirconic acid, zirconium acetate, zirconium oxalate, ammonium zirconium glycolate, ammonium zirconium lactate, ammonium zirconium citrate, and mixtures thereof. Hexafluorozirconic acid is preferred. An example of an yttrium compound is yttrium nitrate. An example of the titanium compound is fluorotitanic acid and its salts. An example of the hafnium compound is hafnium nitrate. An example of the cerium compound is cerous nitrate. The Group IIIB or IVB metal compound is present in the carrier medium in an amount of 10 to 5000 ppm metal, preferably 100 to 1000 ppm metal.

For aqueous carriers, the pH of the solution with dispersion usually ranges from 2.0 to about 7.0 and is preferably about 3.5 to about 5.5. The pH may be adjusted using mineral acids such as hydrofluoric acid, fluoroboric acid, phosphoric acid, and the like, including mixtures thereof; organic acids such as lactic acid, acetic acid, citric acid, or mixtures thereof; and water soluble or water dispersible bases such as sodium hydroxide, ammonium hydroxide, ammonia, or amines such as triethylamine, methylethyl amine, or mixtures thereof.

In one embodiment of the invention, the solution or dispersion further contains a film forming resin. Suitable resins include reaction products of one or more alkanolamines and an epoxy-functional material containing at least two epoxy groups, such as those disclosed in U. S. Patent 5,653,823. Preferably, such resins contain beta hydroxy ester, imide, or sulfide functionality, incorporated by using dimethylolpropionic acid, phthalimide, or mercaptoglycerine as an additional reactant in the preparation of the resin. Other suitable resins include water soluble and water dispersible polyacrylic acids as disclosed in U. S. Patents 3,912,548 and 5,328,525; phenol-aldehyde resins as described in U. S. Patent 5,662,746; water soluble polyamides such as those disclosed in WO 95/33869; copolymers of maleic or acrylic acid with allyl ether as described in Canadian Patent application 2,087,352; and water soluble and dispersible resins including epoxy resins, aminoplasts, phenol-formaldehyde resins, tannins, and polyvinyl phenols as discussed in U. S. Patent 5,449,415. Another suitable resin is the reaction product of an epoxy-containing polymer or oligomer (polyepoxide) with a dialkanolamine and a hydroxy acid. Examples of suitable epoxy-containing polymers or oligomers include polyglycidyl ethers of polyhydric phenols such as the polyglycidyl ether of Bisphenol A. The preferred polyglycidyl ether is the diglycidyl ether of Bisphenol A.

Examples of dialkanolamines include those which contain up to four carbon atoms such as diisopropanolamine, diethanolamine, di(2-hydroxybutyl)amine, and N-(3-hydroxypropyl) ethanolamine. Diethanolamine is preferred.

Examples of hydroxy acids include dimethylolpropionic acid, which is preferred, trimethylolpropionic acid, pentaerythritol, malic acid, lactic acid, glycolic acid, gluconic acid, glucuronic acid, citric acid, 3-hydroxypivalic acid, and salicylic acid.

The reaction product may be prepared as follows: the epoxy-containing polymer or oligomer is added to a suitable reaction vessel with an organic solvent. Suitable solvents include glycol ethers such as ethylene glycol methyl ether and propylene glycol methyl ether. The mixture is heated to a temperature of about 50°C, the amine and hydroxy acid are added, and the mixture allowed to exotherm to a temperature of about 90 to 100°C.

The mole ratio of the epoxy-containing polymer or oligomer to hydroxy acid to amine is from 0.6 to 5.0:0.05 to 5.5:1, preferably 1.5 to 2.5:1.0 to 2.0:1.

The reaction product may then be thinned with additional organic solvents and/or water preferably containing an acid which can form the carrier medium for the reaction product. Examples of other organic solvents include alcohols with up to about 8 carbon atoms such as methanol, isopropanol, and the like, additional glycol ethers such as the monoalkyl ethers of ethylene glycol, diethylene glycol, or propylene glycol, and the like. Water, containing sulfamic acid, is the preferred ingredient in the carrier medium. When present, the water dispersible organic solvents are typically used in amounts up to about twenty (20) percent, preferably ten (10) percent by volume, based on the total volume of the carrier medium with water being the remaining.

When present, the film forming resinous binder is in the carrier medium of the present invention in an amount of 0.005% to 30% based on the total weight of the ingredients in the medium, and the weight ratio of the resin to Group IIIB or IVB metal or metal compound is from 2.0 to 10.0:1, preferably 3.0 to 5.0:1 based on metal.

Other optional materials in the carrier medium include surfactants that function as defoamers or substrate wetting agents. Anionic, cationic, amphoteric, or nonionic surfactants may be used. Compatible mixtures of such materials are also suitable. Surfactants are typically present at levels up to about 1 percent, preferably up to about 0.1 percent by volume, and wetting agents are typically present at levels up to about 2 percent, preferably up to about 0.5 percent by volume, based on the total volume of carrier medium.

The film coverage of the residue of the pretreatment coating composition generally ranges from about 1 to about 1000 milligrams per square meter (mg/m²), and is preferably about 10 to about 400 mg/m². The thickness of the pretreatment coating can vary, but is generally less than about 1 micrometer, preferably ranges from about 1 to about 500 nanometers, and more preferably is about 10 to about 300 nanometers.

After contact with the Group IIIB or IVB metal compound, the sheet metal is coated with a protective wet or dry lubricant for shipping or storage. Such lubricants may be any of those used conventionally in the art. An example of a wet lubricant is oil. U. S. Patent No. 5,229,450 describes a suitable dry lubricant.

Not intending to be bound by any theory, the inventors believe that by forming the metal according to the process of the present invention, a stronger chemical interaction between metal atoms at the metal surface and the Group IIIB or IVB metal compound is possible because the virgin metal surface is free of residues of oil and alkaline or acidic cleaners that may inhibit chemical reaction, thus providing enhanced corrosion protection of the finished metal product.

## Claims

1. In a process for treating a metal coated steel sheet, comprising the following steps:
(a) contacting a surface of the metal coated sheet steel with a Group IIIB or IVB metal compound or mixture thereof dissolved or dispersed in a carrier medium; followed by
(b) contacting the surface of the metal coated sheet steel from step (a) with a protective lubricant.

2. The process of claim 1 wherein the Group IIIB or IVB metal compound is present in an aqueous carrier medium, vapor or aerosol.

3. The process of claim 2 wherein the metal surface is contacted with the Group IIIB or IVB metal compound in the aqueous carrier medium at a carrier medium temperature of ambient to 65°C (ambient to 150°F).

4. The process of claim 2 wherein the metal surface is contacted with the Group IIIB or IVB metal compound by roll coating.

5. The process of claim 2 wherein the metal surface is contacted with the Group IIIB or IVB metal compound as an aerosol or a vapor.

6. The process of claim 1 wherein the Group IIIB or IVB metal compound is a zirconium compound.

7. The process of claim 6 wherein the zirconium compound is present in the aqueous medium in an amount of 10 to 5000 ppm Zr.

8. The process of claim 2 wherein the aqueous medium further comprises a resinous binder.

9. The process of claim 8 wherein the resinous binder comprises a reaction product of an epoxy group-containing polymer or oligomer, a hydroxy functional acid and a dialkanolamine.

10. The process of claim 9 wherein the epoxy group-containing polymer or oligomer is a polyglycidyl ether of a polyhydric phenol.

11. The process of claim 9 wherein the epoxy group-containing polymer or oligomer is the diglycidyl ether of Bisphenol A.

12. The process of claim 9 in which the dialkanolamine is diethanolamine.

13. The process of claim 9 in which the hydroxy functional acid is dimethylolpropionic acid.

14. The process of claim 9 wherein the epoxy group-containing polymer or oligomer, hydroxy functional acid, and dialkanolamine are reacted in a 0.6 to 5.0:0.05 to 5.5:1 mole ratio.

15. The process of claim 9 wherein the medium is substantially free of chrome.

16. The process of claim 1 wherein the metal is zinc coated steel.

17. A treated metal coated steel sheet formed in accordance with the process of claim 1.

18. A coated metal coated steel sheet, comprising:
(a) a metal substrate;
(b) a coating comprising a Group IIIB or IVB metal compound or mixture thereof formed upon at least a portion of a surface of the metal substrate;
(c) and a protective lubricant coating formed upon at least a portion of the coating.

19. The coated metal coated steel sheet of claim 18 wherein the Group IIIB or IVB metal compound is a zirconium compound.

20. The coated metal coated steel sheet of claim 18 wherein the coating comprising a Group IIIB or IVB metal compound or mixture thereof is substantially free of chrome.

21. The coated metal coated steel sheet of claim 18 wherein the metal substrate is zinc coated steel.

## Patentansprüche

1. Verfahren zur Behandlung eines metallbeschichteten Stahlblechs umfassend die folgenden Schritte:
(a) In-Kontakt-Bringen einer Oberfläche des metallbeschichteten Stahlblechs mit einer Verbindung eines Metalls der Gruppe IIIB oder IVB oder einer Mischung davon, aufgelöst oder dispergiert in einem Trägermedium, gefolgt von
(b) In-Kontakt-Bringen der Oberfläche des metallbeschichteten Stahlblechs aus Schritt (b) mit einem schützenden Gleitmittel.

2. Verfahren nach Anspruch 1, wobei die Verbindung des Metalls der Gruppe IIIB oder IVB in einem wässrigen Trägermedium, Dampf oder Aerosol vorhanden ist.

3. Verfahren nach Anspruch 2, wobei die Metalloberfläche mit der Verbindung des Metalls der Gruppe IIIB oder IVB in dem wässrigen Trägermedium bei einer Trägermediumtemperatur von Umgebungstemperatur bis 65°C (Umgebungstemperatur bis 150°F) in Kontakt gebracht wird.

4. Verfahren nach Anspruch 2, wobei die Metalloberfläche mit der Verbindung des Metalls der Gruppe IIIB oder IVB durch Walzenbeschichtung in Kontakt gebracht wird.

5. Verfahren nach Anspruch 2, wobei die Metalloberfläche mit der Verbindung des Metalls der Gruppe IIIB oder IVB als Aerosol oder als Dampf in Kontakt gebracht wird.

6. Verfahren nach Anspruch 1, wobei die Verbindung des Metalls der Gruppe IIIB oder IVB eine Zirkoniumverbindung ist.

7. Verfahren nach Anspruch 6, wobei die Zirkoniumverbindung in dem wässrigen Medium in einer Menge von 10 bis 5000 ppm Zirkonium vorhanden ist.

8. Verfahren nach Anspruch 2, wobei das wässrige Medium zusätzlich ein harzhaltiges Bindemittel enthält.

9. Verfahren nach Anspruch 8, wobei das harzhaltige Bindemittel ein Reaktionsprodukt eines epoxygruppenhaltigen Polymers oder Oligomers, einer hydroxyfunktionellen Säure und eines Dialkanolamins enthält.

10. Verfahren nach Anspruch 9, wobei das epoxygruppenhaltige Polymer oder Oligomer ein Polyglycidylether eines mehrwertigen Phenols ist.

11. Verfahren nach Anspruch 9, wobei das epoxygruppenhaltige Polymer oder Oligomer der Diglycidylether von Bisphenol A ist.

12. Verfahren nach Anspruch 9, in dem das Dialkanolamin Diethanolamin ist.

13. Verfahren nach Anspruch 9, wobei die hydroxyfunktionelle Säure Dimethylolpropionsäure ist.

14. Verfahren nach Anspruch 9, wobei das epoxygruppenhaltige Polymer oder Oligomer, die hydroxyfunktionelle Säure und das Dialkanolamin in einem Molverhältnis von 0,6 bis 5,0:0,05 bis 5,5:1 umgesetzt werden.

15. Verfahren nach Anspruch 9, wobei das Medium im Wesentlichen frei von Chrom ist.

16. Verfahren nach Anspruch 1, wobei das Metall zinkbeschichteter Stahl ist.

17. Behandeltes metallbeschichtetes Stahlblech, das entsprechend des Verfahrens nach Anspruch 1 ausgebildet ist.

18. Beschichtetes mit Metall beschichtetes Stahlblech, enthaltend:
(a) ein Metallsubstrat,
(b) eine Beschichtung enthaltend eine Verbindung eines Metalls der Gruppe IIIB oder IVB oder eine Mischung davon, die auf wenigstens einem Teil einer Oberfläche des Metallsubstrats ausgebildet ist,
(c) und eine schützende Gleitmittelbeschichtung, die auf wenigstens einem Teil der Beschichtung ausgebildet ist.

19. Beschichtetes mit Metall beschichtetes Stahlblech nach Anspruch 18, wobei die Verbindung des Metalls der Gruppe IIIB oder IVB eine Zirkoniumverbindung ist.

20. Beschichtetes mit Metall beschichtetes Stahlblech nach Anspruch 18, wobei die Beschichtung, die eine Verbindung eines Metalls der Gruppe IIIB oder IVB oder eine Mischung davon enthält, im Wesentlichen frei von Chrom ist.

21. Beschichtetes mit Metall beschichtetes Stahlblech nach Anspruch 18, wobei das Metall zinkbeschichteter Stahl ist.

## Revendications

1. Procédé de traitement d'une tôle d'acier revêtue de métal, comprenant les étapes suivantes :
(a) la mise en contact d'une surface de la tôle d'acier revêtue de métal avec un composé de métal du Groupe IIIB ou IVB ou leur mélange dissous ou dispersé dans un milieu de support; suivie de
(b) la mise en contact de la surface de la tôle d'acier revêtue de métal de l'étape (a) avec un lubrifiant protecteur.

2. Procédé suivant la revendication 1, dans lequel le composé de métal du Groupe IIIB ou IVB est présent dans un milieu de support aqueux, de la vapeur ou un aérosol.

3. Procédé suivant la revendication 2, dans lequel la surface de métal est mise en contact avec le composé de métal du Groupe IIIB ou IVB dans le milieu de support aqueux à une température de milieu de support allant de la température ambiante à 65°C (température ambiante à 150°F).

4. Procédé suivant la revendication 2, dans lequel la surface de métal est mise en contact avec le composé de métal du Groupe IIIB ou IVB par application au rouleau.

5. Procédé suivant la revendication 2, dans lequel la surface de métal est mise en contact avec le composé de métal du Groupe IIIB ou IVB sous la forme d'un aérosol ou de vapeur.

6. Procédé suivant la revendication 1, dans lequel le composé de métal du Groupe IIIB ou IVB est un composé de zirconium.

7. Procédé suivant la revendication 6, dans lequel le composé de zirconium est présent dans le milieu aqueux en une quantité de 10 à 5.000 ppm de Zr.

8. Procédé suivant la revendication 2, dans lequel le milieu aqueux comprend de plus un liant résineux.

9. Procédé suivant la revendication 8, dans lequel le liant résineux comprend un produit de réaction d'un polymère ou oligomère contenant des groupes époxy, d'un acide à fonction hydroxy et d'une dialcanolamine.

10. Procédé suivant la revendication 9, dans lequel le polymère ou oligomére contenant des groupes époxy est un éther polyglycidylique d'un phénol polyatomique.

11. Procédé suivant la revendication 9, dans lequel le polymère ou oligomère contenant des groupes époxy est l'éther diglycidylique de Bisphénol A.

12. Procédé suivant la revendication 9, dans lequel la dialcanolamine est de la diéthanolamine.

13. Procédé suivant la revendication 9, dans lequel l'acide à fonction hydroxy est de l'acide diméthylolpropionique.

14. Procédé suivant la revendication 9, dans lequel le polymère ou oligomère contenant des groupes époxy, l'acide à fonction hydroxy et la dialcanolamine sont mis en réaction dans un rapport molaire de 0,6 à 5,0/0,05 à 5,5/1.

15. Procédé suivant la revendication 9, dans lequel le milieu est essentiellement exempt de chrome.

16. Procédé suivant la revendication 1, dans lequel le métal est de l'acier revêtu de zinc.

17. Tôle d'acier revêtue de métal traitée formée suivant le procédé de la revendication 1.

18. Tôle d'acier revêtue de métal revêtue, comprenant :
(a) un substrat métallique;
(b) un revêtement comprenant un composé de métal du Groupe IIIB ou IVB ou un mélange de ceux-ci formé sur au moins une partie d'une surface du substrat métallique; et
(c) un revêtement lubrifiant protecteur formé sur au moins une partie du revêtement.

19. Tôle d'acier revêtue de métal revêtue suivant la revendication 18, dans laquelle le composé de métal du Groupe IIIB ou IVB est un composé de zirconium.

20. Tôle d'acier revêtue de métal revêtue suivant la revendication 18, dans laquelle le revêtement comprenant un composé de métal du Groupe IIIB ou IVB ou un mélange de ceux-ci est essentiellement exempt de chrome.

21. Tôle d'acier revêtue de métal revêtue suivant la revendication 18, dans laquelle le métal est de l'acier revêtu de zinc.
